# EUROPÄISCHE PATENTANMELDUNG

(11) **EP 2 294 946 A1**
(43) Veröffentlichungstag der Anmeldung: **16.03.2011**
(21) Anmeldenummer: 10174800.2
(22) Anmeldetag: 01.09.2010
(51) Int. Cl.: A47D 1/10, B62K 9/00, A63G 13/10

(54) **Fahrbares Kinderspielzeug**

(30) Priorität: 10.09.2009 AT 14242009
(71) Anmelder: Staudinger, Gerold, 5400 Hallein (AT); Seidl, Heidi Maria, 5400 Hallein (AT)
(72) Erfinder: Staudinger, Gerold, 5400 Hallein (AT); Seidl, Heidi Maria, 5400 Hallein (AT)
(74) Vertreter: Babeluk, Michael

(57) **Zusammenfassung**

Die Erfindung betrifft ein fahrbares Kinderspielzeug (3), insbesondere Zweirad oder Dreirad, mit einem abnehmbaren Sitz (11), wobei der Sitz (11) eine Halteeinrichtung (16) aufweist, welche ausgebildet ist, um den vom Kinderspielzeug (3) abgenommenen Sitz (11) an einer Tischplatte (14) zu befestigen. Besonders vielfältige Einsatzmöglichkeiten werden dadurch ermöglicht, dass der Sitz (11) mit einer höhenverstellbaren Grundplatte (8) des Kinderspielzeugs (3) lösbar verbindbar ist, wobei vorzugsweise die Grundplatte (8) eine weitere Sitzfläche ausbildet.

## Beschreibung

Die Erfindung betrifft ein fahrbares Kinderspielzeug, insbesondere Zweirad oder Dreirad, mit einem abnehmbaren Sitz, wobei der Sitz eine Halteeinrichtung aufweist, welche ausgebildet ist, um den vom Kinderspielzeug abgenommenen Sitz an einer Tischplatte zu befestigen.

Fahrbare Kinderspielzeuge, welche auf einer Wippschaukel montierbar sind, sind aus den Veröffentlichungen EP 0 906 861 B1, EP 1 308 381 A1, US 6,161,847 A, US 5,503,411 A und US 2,499,531 A bekannt.

Weiters ist aus der US 4,958,842 A ein multifunktionales Kinderspielzeug bekannt, welches wahlweise in einen Scooter, ein Schaukelpferd, oder ein Dreirad umgewandelt werden kann.

Kleinkindersitze, welche lösbar an Tischplatten von Tischen befestigbar sind, sind etwa aus den Veröffentlichungen DE 846 778 C oder DE 105 26 50 B bekannt.

Die DE 930 708 B zeigt einen für verschiedene Verwendungszwecke geeigneten Kindersitz, welcher beispielsweise auf Seilen an einem Schwenkarm aufgehängt werden kann.

Aus der DE 198 42 294 C2 ist ein Sitz für Kinder bekannt, welcher an der Längsstange eines Fahrrades lösbar befestigt werden kann. Der Sitz kann aber auch auf die Sitzfläche eines herkömmlichen Sessels gestellt und über Fanghaken gesichert werden.

Die DE 201 00 439 U1 beschreibt ein Dreirad mit einem abnehmbaren Kindersitz, wobei der abgenommene Sitz mit Hilfe einer Klemmeinrichtung an einer Tischplatte fixiert werden kann. Der Sitz weist einen umlaufenden Sicherheitsbügel und eine daran befestigte Halteeinrichtung auf.

Die DE 32 12 840 A1 zeigt einen Kinderschalensitz, welcher an einer Tischplatte sowie an einem Holm eines Fahrradrahmens befestigt werden kann.

Ein Multifunktionssitz für Kinder, welcher sowohl an einer Tischplatte als auch an einem Fahrrad befestigt werden kann, ist auch aus den Veröffentlichungen CN 101438906 A und CN 201115552 Y bekannt.

Die DE 298 22 874 U1 offenbart ein Kinderfahrzeug mit einer Aufnahme zur Anbringung einer multifunktionalen Schiebestange.

Aufgabe der Erfindung ist es ein multifunktionales Spielzeug mit praktischen Einsatzmöglichkeiten zu entwickeln.

Erfindungsgemäß wird dies dadurch erreicht, dass der Sitz mit einer höhenverstellbaren Grundplatte des Kinderspielzeugs lösbar verbindbar ist, wobei vorzugsweise die Grundplatte eine weitere Sitzfläche ausbildet. Durch die weitere Sitzfläche kann das Kinderspielzeug auch beispielsweise als Lauflernrad von dem Kleinkindersitz entwachsenen Kindern benutzt werden.

Der Sitz kann über eine Klemm- oder Schraubeinrichtung mit dem als Kinderfahrzeug ausgebildeten Kinderspielzeug fest verbunden werden. Im mit dem Kinderspielzeug verbundenen Zustand ist der Sitz dabei an der Fahrerposition des Kinderspielzeuges angeordnet. Das Kleinkind kann somit - im Kindersitz sitzend - aktiv das Kinderspielzeug lenken. Wahlweise kann im Bereich der Rückenlehne des Sitzes eine Führungsstange lösbar befestigt werden, wodurch ein Erwachsener das Kinderspielzeug führen kann. Dadurch, dass der Sitz eine Sitzplatte und einen von dieser beabstandeten umlaufenden Sicherheitsbügel aufweist, ist er insbesondere für Kleinkinder ab einem Jahr bereits geeignet. Ein hoher praktischer Wert entsteht durch die Möglichkeit, den Sitz mit wenigen Handgriffen vom Kinderspielzeug zu trennen und an einer Tischplatte eines Tisches mittels der Halteeinrichtung lösbar zu befestigen. Diese doppelte Funktionalität des Sitzes hat den Vorteil, dass beispielsweise bei Ausflügen mit einem das Kinderfahrzeug benutzenden Kleinkind für Pausen kein separater Kleinkindersitz benötigt wird, da der mehrfunktionale, einen Kleinkindersitz ausbildende Sitz Teil des Kinderspielzeuges ist. Um Behinderung oder Verletzungen im am Kinderspielzeug montierten Zustand zu vermeiden, kann die Halteeinrichtung zwischen einer Ruhestellung und einer Betriebsstellung verschwenkt oder verschoben werden.

Eine einfache Anpassung an die Größe und das Alter des Kindes kann erreicht werden, wenn die Grundplatte über ein eine Koppel und zwei gegenüberliegende Arme aufweisendes Gelenkviereck mit dem Rahmen des Kinderspielzeuges verbunden ist. Dabei kann die Grundplatte die Koppel des Gelenkvierecks ausbilden.

Eine weitere Einsatzmöglichkeit des Sitzes bietet sich, wenn im Bereich des Sicherheitsbügels Aufhängevorrichtungen für Tragseile einer Hängeschaukel vorgesehen sind. Somit kann der Sitz problemlos in eine Kinderschaukel verwandelt werden.

In weiterer Ausführung der Erfindung kann vorgesehen sein, dass das Kinderspielzeug lösbar mit einer Wippeinrichtung verbunden werden kann. Dadurch kann somit das Kinderspielzeug sehr rasch in ein "Schaukelpferd" umgebaut werden.

Um eine hohe Robustheit und Kindersicherheit zu gewährleisten besteht das Kinderspielzeug zumindest überwiegend aus Holz.

Die Erfindung wird im Folgenden anhand der Figuren näher erläutert. Es zeigen
- Fig. 1: ein erfindungsgemäßes Kinderspielzeug mit montiertem Sitz in ei- ner Seitenansicht;
- Fig. 2: einen vom Kinderspielzeug entfernten und als Kinderschaukel ver- wendbaren Sitz;
- Fig. 3: einen an einer Tischplatte befestigten Sitz des Kinderspielzeuges;
- Fig. 4: das Kinderspielzeug mit demontiertem Sitz; und
- Fig. 5: das Kinderspielzeug in einem auf einer Wippeinrichtung montier- tem Zustand.

Das im Ausführungsbeispiel durch ein Zweirad 1 mit Lenker 1a, Rädern 2 und Stützrädern 2a gebildete Kinderspielzeug weist ein mit einem Rahmen 4 verbundenes Gelenkviereck 7 mit einer Koppel 5 und zwei gegenüberliegenden Armen 6 auf, wobei die Koppel 5 eine höhenverstellbare Grundplatte 8 ausbildet. Auf der höhenverstellbaren Grundplatte 8 ist ein eine Sitzplatte 9 und einen umlaufenden Sicherheitsbügel 10 aufweisender Sitz 11 lösbar befestigt. Die Befestigung erfolgt beispielsweise durch nicht weiter dargestellte Schraubklemmen. Im Bereich der Rückenlehne 12 ist am Sitz 11 eine Führungsstange 13 lösbar zu befestigen. Über die Führungsstange 13 kann das Kinderspielzeug 3 beispielsweise durch einen Erwachsenen geschoben und geführt werden.

Bei Bedarf kann der Sitz 11 mit wenigen Handgriffen von der Grundplatte 8 gelöst und einer anderen Funktion zugeführt werden.

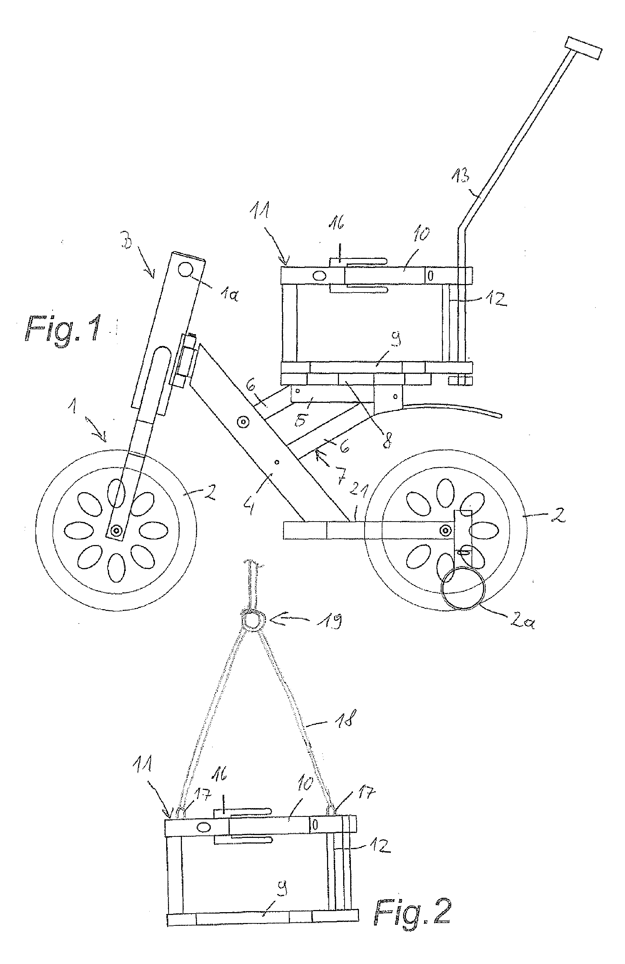

Der Sitz 11 kann - wie in Fig. 2 gezeigt ist - durch Ösen oder dergleichen gebildete Aufhängevorrichtungen 17 für Tragseile 18 einer Kinderschaukel 19 aufweisen, wobei die Aufhängevorrichtungen 17 vorteilhafterweise am umlaufenden Sicherheitsbügel 10 angeordnet sind.

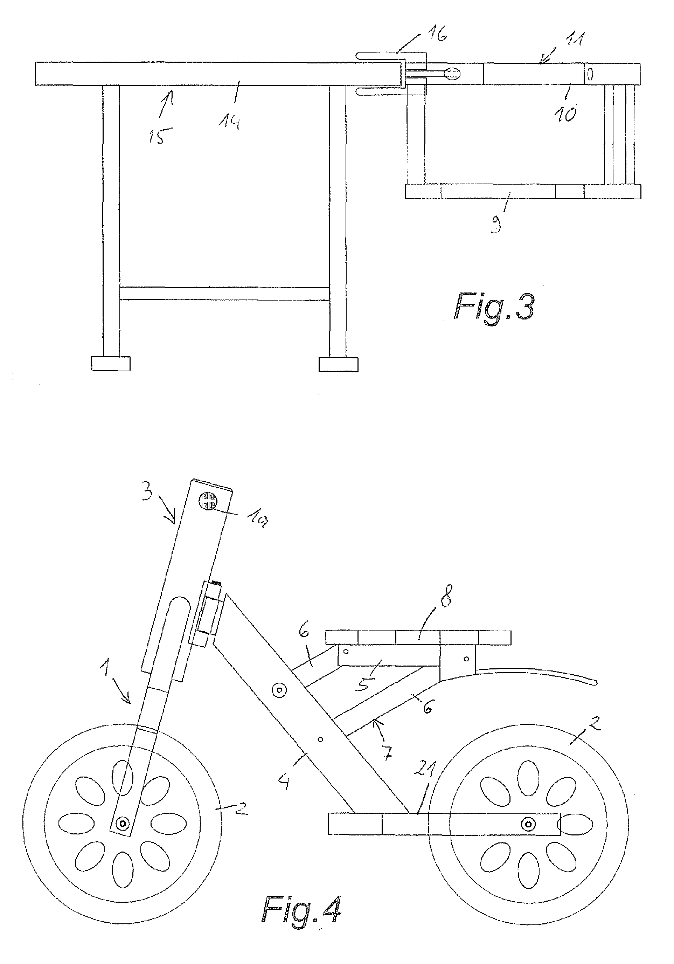

Fig. 3 zeigt beispielsweise den an einer Tischplatte 14 eines Tisches 15 durch eine Halteeinrichtung 16 lösbar befestigten Sitz 11. Die Halteeinrichtung 16, welche beispielsweise als Klemmeinrichtung ausgebildet sein kann, kann zwischen einer in Fig. 3 dargestellten Betriebsstellung und einer aus Fig. 1 ersichtlichen Ruhestellung verschwenkt oder verschoben werden.

Fig. 4 zeigt das Kinderspielzeug 3 bei demontiertem Sitz 11. Bei demontiertem Sitz 11 und gegebenenfalls demontierten Stützrädern 2a kann das Kinderspielzeug 3 für etwas ältere Kinder als Lauflernrad verwendet werden, wobei die Grundplatte 8 als weitere Sitzfläche fungiert und einem Radsattel nachgeformt sein kann. Über das Gelenksviereck 7 kann die Lage und Höhe der Grundplatte 8 in weitem Bereich verstellt werden.

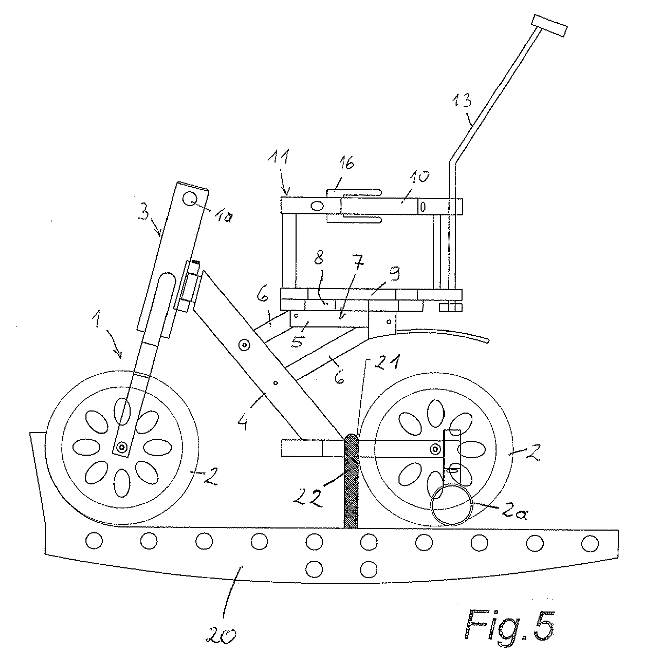

Wie in Fig. 5 dargestellt ist, kann das Kinderspielzeug 3 auf einer Wippeinrichtung 20 befestigt werden und somit als Wippschaukel eingesetzt werden. Der Rahmen 4 weist dazu geeignete Angriffsflächen 21 für eine Befestigungsvorrichtung 22 der Wippeinrichtung 20 auf.

## Patentansprüche

1. Fahrbares Kinderspielzeug (3), insbesondere Zweirad oder Dreirad, mit einem abnehmbaren Sitz (11), wobei der Sitz (11) eine Halteeinrichtung (16) aufweist, welche ausgebildet ist, um den vom Kinderspielzeug (3) abgenommenen Sitz (11) an einer Tischplatte (14) zu befestigen, **dadurch gekennzeichnet, dass** der Sitz (11) mit einer höhenverstellbaren Grundplatte (8) des Kinderspielzeugs (3) lösbar verbindbar ist, wobei vorzugsweise die Grundplatte (8) eine weitere Sitzfläche ausbildet.

2. Kinderspielzeug (3) nach Anspruch 1, **dadurch gekennzeichnet, dass** die Halteeinrichtung (16) als Klemmeinrichtung ausgebildet ist.

3. Kinderspielzeug (3) nach Anspruch 1 oder 2, **dadurch gekennzeichnet, dass** der Sitz (11) als Kleinkindersitz ausgebildet ist und eine Sitzplatte (9), sowie einen von dieser beanstandeten umlaufenden Sicherheitsbügel (10) aufweist, wobei vorzugsweise die Halteeinrichtung (16) am Sicherheitsbügel (10) befestigt ist.

4. Kinderspielzeug (3) nach einem der Ansprüche 1 bis 3, **dadurch gekennzeichnet, dass** die Halteeinrichtung (16) zwischen einer Ruhestellung und einer Betriebsstellung schwenkbar oder verschiebbar ist.

5. Kinderspielzeug (3) nach einem der Ansprüche 1 bis 4, **dadurch gekennzeichnet, dass** am Sitz (11), vorzugsweise im Bereich einer Rückenlehne, eine Führungsstange (13) lösbar befestigbar ist.

6. Kinderspielzeug (3) nach einem der Ansprüche 1 bis 5, **dadurch gekennzeichnet, dass** die Grundplatte (8) über ein eine Koppel (5) und zwei gegenüberliegende Arme (6) aufweisendes Gelenkviereck (7) mit einem Rahmen (4) des Kinderspielzeuges (3) verbunden ist, wobei besonders vorzugsweise die Grundplatte (8) die Koppel (5) des Gelenksvierecks (7) ausbildet.

7. Kinderspielzeug (3) nach einem der Ansprüche 1 bis 6, **dadurch gekennzeichnet, dass** der Sitz (11) vorzugsweise im Bereich des Sicherheitsbügels (10) Aufhängevorrichtungen (17) für Tragseile (18) einer Hängeschaukel (19) aufweist.

8. Kinderspielzeug (3) nach einem der Ansprüche 1 bis 7, **dadurch gekennzeichnet, dass** das Kinderspielzeug (3) lösbar mit einer Wippeinrichtung (20) verbindbar ist, wobei vorzugsweise der Rahmen (4) des Kinderspielzeuges Angriffsflächen (21) für eine vorzugsweise durch eine Klemmeinrichtung gebildete Befestigungsvorrichtung (22) der Wippeinrichtung (20) aufweist.

9. Kinderspielzeug (3) nach einem der Ansprüche 1 bis 8, **dadurch gekennzeichnet, dass** das Kinderspielzeug (3) zumindest überwiegend aus Holz besteht.
